# EUROPÄISCHE PATENTSCHRIFT

(11) **EP 2 337 697 B1**
(45) Veröffentlichungstag und Bekanntmachung des Hinweises auf die Patenterteilung: **11.09.2013**
(21) Anmeldenummer: 09776422.9
(22) Anmeldetag: 07.03.2009
(51) Int. Cl.: B60J 10/02, B60J 10/00

(54) **SCHEIBENABDICHTUNG**
GLASS SEAL
JOINT D ÉTANCHÉITÉ POUR VITRE

(30) Priorität: 02.10.2008 DE 202008013133 U
(43) Veröffentlichungstag der Anmeldung: 29.06.2011
(73) Patentinhaber: Rehau AG & Co, 95111 Rehau (DE)
(72) Erfinder: SCHAFF, Alexander, 04207 Leipzig (DE); GRUBER, Steffen, 95111 Rehau (DE); KAISER, Udo, 44797 Bochum (DE)
(86) Internationale Anmeldenummer: PCT/EP2009/001656
(87) Internationale Veröffentlichungsnummer: WO 2010/037432

(56) Entgegenhaltungen:
- EP-A- 0 249 560
- EP-A- 0 304 694
- EP-B- 1 280 675
- DE-A1- 3 612 923

## Beschreibung

Die vorliegende Erfindung betrifft eine Scheibenabdichtung zum Anschluss eines Anbauteils an eine Scheibe eines Kraftfahrzeuges, mit einem Halteprofil aufweisend einen Halteschenkel, der an der Oberfläche der Scheibe anliegt und einem Rastprofil zur Aufnahme eines Anschlusselementes des Anbauteils.

Aus der DE 10 2004 044 598 A1 ist eine Scheibenabdichtung mit den eingangs beschriebenen Merkmalen bekannt. Das Halteprofil weist eine Hinterschneidung zur Aufnahme eines Fortsatzes oder einer Raste einer Wasserkastenabdeckung auf. Ferner ist eine Verstärkungsseele vorgesehen. In den Krümmungen der Seele sind Kerben vorgesehen, deren Gestaltung die Einstellung der gewünschten Montage- bzw. Demontagekraft ermöglicht. Dabei können jedoch die Montagekraft und die Demontagekraft nicht unabhängig voneinander, sondern nur gemeinsam konstruktiv festgelegt werden.

In der gattungsgemäβen EP 1 280 675 B1 ist ein Profilkörper offenbart, der mit Versteifungseinlagen versehen ist und zur Aufnahme einer einspringenden Rippe einer Wasserkastenabdeckung eine Hinterschneidung aufweist. Der Profilkörper ist mit einem elastischen Stützschenkel versehen, der die Außenflächen der Scheiben-Unterkante und des oberen Rands der Wasserkastenabdeckung im Wesentlichen bündig abschließt. Das Dichtungsprofil liegt mittels einer selbstklebenden Haftschicht von hinten an der Frontscheibe an. Der Profilkörper muss entgegen der wirkenden Montagekraft rückseitig über eine Pufferleiste an einem Karosseriebestandteil abgestützt werden. Soll eine hohe Demontagekraft erreicht werden, müssen entsprechend hohe Montagekräfte angewendet werden, die eine Abstützung des Profilkörpers an dem Karosseriebestandteil zwingend erforderlich machen. Die Haftschicht kann ohne Abstützung die auftretenden Montagekräfte nicht aufnehmen, da sich der Profilkörper bei der Montage der Wasserkastenabdeckung von der Frontscheibe lösen würde. Eine geringe Montagekraft, bei gleichzeitiger hoher Demontagekraft ist nicht erzielbar.

Vor diesem Hintergrund liegt der Erfindung die Aufgabe zugrunde, eine Scheibenabdichtung mit den eingangs beschriebenen Merkmalen anzugeben, die eine leichte Montierbarkeit eines Anbauteils bei gleichzeitig hoher Haltekraft ermöglicht.

Erfindungsgemäß wird diese Aufgabe mit den Merkmalen von Anspruch 1 gelöst.

Wie aus EP 1 280 675 B1 bekannt, weist das Rastprofil mindestens zwei Profilschenkel auf die gemeinsam einen hinterschnittenen Klemmkanal bilden. Erfindungsgemäβ weist der dem Halteschenkel zugewandte erste Profilschenkel eine Unterbrechung auf, die den ersten Profilschenkel in zwei Teilbereiche unterteilt. Zusätzliches ist ein Verbindungselement vorgesehen, das das Rastprofil mit einem vom ersten Profilschenkel beabstandeten Verbindungsbereich des Halteschenkels verbindet. Ferner steht der untere Teilbereich der zwei Teilbereiche in Verbindung mit diesem Verbindungselement. Bei der Montage des Anbauteils erfolgt so eine Vergrößerung des Abstandes zwischen den Teilbereichen, während bei einer Demontage des Anbauteils die Teilbereiche sich aneinander annähern. Das Rastprofil überträgt die Montagekräfte auf das Verbindungselement. Das Verbindungselement wirkt als Rasthebelarm und die Montagekräfte werden reduziert. Über die Veränderung des Abstandes von Rastprofilschenkel und Verbindungsbereich kann die Länge des Verbindungselementes, und damit die Montagekraft in einem weiten Bereich konstruktiv eingestellt werden. Im Gegensatz dazu vergrößert sich bei der Demontage des Anbauteils die Demontagekraft, sobald z.B. die Teilbereiche aneinander anliegen. Der Rasthebelarm des Verbindungselements verkürzt sich, bzw. ist gar nicht mehr wirksam. Die Montage- und Demontagekräfte können in einem weiten Bereich, und zwar völlig unabhängig voneinander, einfach und variabel eingestellt werden. Vorteilhafterweise ist die Geometrie des Klemmkanals derart gestaltet, dass die durch die Unterbrechung des Profilschenkels ermöglichte Auslenkung des Rastprofils den hinterschnittenen Bereich des Klemmkanals verringert und das Anschlusselement mit einer geringeren Kraft das Rastprofil hintergreifen kann.

Der Halteschenkel der Scheibenabdichtung kann ein an die Oberfläche der Scheibe angrenzendes Klebeband oder eine an die Oberfläche der Scheibe angrenzende Klebstoffschicht aufweisen. Mit dem Klebeband kann der Halteschenkel des Halteprofils schnell und einfach mit der Oberfläche der Scheibe verbunden werden. Es kann auch eine Silikonschicht oder auch jedes andere geeignete Fügeverfahren zum Verbinden des Halteprofils mit der Scheibe des Kraftfahrzeuges vorgesehen sein. Aufgrund der geringen Montagekräfte ist eine rohbauseitige hintere Abstützung der Scheibenabdichtung an der Fahrzeugkarosserie, wie bei EP 1 280 675 B1 beschrieben, nicht erforderlich. Auf das teure und aufwendige Vergießen des Halteprofils mit z.B. einem Klebstoff kann ebenfalls verzichtet werden. Durch die erfindungsgemäße Scheibenabdichtung kann dieser zusätzliche Aufwand vermieden werden, so dass sich ein geringerer Konstruktionsaufwand, eine größere Designfreiheit und eine Reduzierung der Kosten- und der Montagezeiten ergibt.

Das Verbindungselement der Scheibenabdichtung kann an den Verbindungsbereich im Wesentlichen rechtwinklig anschließen. Die bei der Montage des Anbauteils über den Rasthebelarm des Verbindungselementes übertragenen Montagekräfte werden dann im Wesentlichen senkrecht auf den Kontaktbereich von Halteschenkel und Oberfläche der Scheibe übertragen. Durch den rechtwinkligen Anschluss an den Verbindungsbereich führen die eingeleiteten Montagekräfte zu keiner, oder nur einer geringen, Schälbeanspruchung des Klebebandes, bzw. der Klebstoffschicht.

Der Verbindungsbereich der Scheibenabdichtung ist vorteilhafterweise in etwa in der Mitte des Halteschenkels angeordnet. Die bei der Montage auftretenden, und über das Verbindungselement in den Verbindungsbereich eingeleiteten, Montagekräfte können vorteilhafterweise von dem Halteschenkel gleichmäßig auf den Kontaktbereich zur Oberfläche der Scheibe übertragen und verteilt werden.

Das Verbindungselement der Scheibenabdichtung ist vorteilhafterweise im Querschnitt im Wesentlichen L-förmig ausgebildet. Diese Geometrie ermöglicht zum einen den rechtwinkligen Anschluss an den Halteschenkel, und zum anderen die kürzeste Verbindung mit dem Rastprofil. Alternativ hierzu kann es vorteilhaft sein, dass das Verbindungselement eine im Wesentlichen gebogene Form aufweist, über deren Geometrieanpassung die Federsteifigkeit des Verbindungselementes, und somit ebenfalls die Montagekraft angepasst werden kann.

Die einander zugewandten Ränder der Teilbereiche des Profilschenkels können vorteilhafterweise im Querschnitt eine zueinander komplementäre Kontur aufweisen. Die zueinander komplementären Konturen greifen vorzugsweise so ineinander ein, dass ein Ausknicken und/oder aneinander Abgleiten der beiden Teilbereiche des Profilschenkels durch die bei der Demontage auftretende Druckbelastung auf die beiden Teilbereiche zuverlässig verhindert wird. Zudem wird die Demontagekraft gleichmäßig und sicher in die Scheibe übertragen.

Die Unterbrechung des dem Halteschenkel zugewandte ersten Profilschenkels kann eine geschlitzte Form aufweisen.

Innerhalb der Unterbrechung des Profilschenkels kann ein im Vergleich zum Halteprofil elastischeres Material angeordnet sein. Das gegenüber dem Material des Halteprofils elastischere Material in der Unterbrechung ermöglicht durch seine größere Dehnbarkeit weiterhin eine Auslenkung des Rasthebelarmes des Verbindungselementes. Vorteilhafterweise ist zudem eine Abdichtung des von dem geteilten Profilschenkel, dem Verbindungselement und dem Halteschenkel eingeschlossenen Hohlraumes gewährleistet. Über die Elastizität des gewählten Materials in der gefüllten Unterbrechung kann vorteilhafterweise die Montagekraft zusätzlich eingestellt und angepasst werden. Vorzugsweise kann das Material in der gefüllten Unterbrechung ein geschäumtes Material, wie z.B. ein Moosgummi, sein oder weiter vorzugsweise ein Material mit einer hohen Dehnfähigkeit.

Zwischen dem Rastprofil und dem Verbindungsbereich kann mindestens ein Abstützelement angeordnet sein, das ebenfalls eine Unterbrechung aufweist. Das Abstützelement und der Profilschenkel können vorteilhafterweise so aufeinander abgestimmt sein, dass die Teilbereiche des Abstützelementes aneinander anliegen, bevor die Teilbereiche des Profilschenkels aneinander anliegen. Über den Abstand zwischen Abstützelement und Verbindungsbereich kann die Demontagekraft eingestellt werden, indem eine Variation des Abstandes den bei der Demontage wirkenden Rasthebelarm verändert. Das Abstützelement und der Profilschenkel können weiter vorteilhafterweise so aufeinander abgestimmt sein, dass die jeweiligen Teilbereiche gleichzeitig aneinander anliegen, so dass die auftretenden Demontagekräfte gleichmäßig von Profilschenkel und Abstützelement aufgenommen und in die Scheibe übergeleitet werden. Hierbei kann es zudem weiter von Vorteil sein nicht ein einziges Abstützelement, sondern mehrere Abstützelemente vorzusehen.

Eine vorteilhafte Weiterbildung der Erfindung sieht vor, auf den ersten Profilschenkel ganz zu verzichten, und die bei der Demontage auftretenden Kräfte allein über Abstützelemente aufzunehmen. Das Rastprofil weist in diesem Fall lediglich einen einzigen Profilschenkel auf.

Die Scheibenabdichtung kann vorteilhafterweise ein an das Halteprofil anschließendes Profilelement aufweisen, das den Bereich zwischen Scheibe und Anbauteil abdichtet. Vorzugsweise kann das Profilelement einstückig an das Halteprofil angeformt sein und weiter vorzugsweise einen Endabschnitt aus einem im Vergleich mit dem Material des Halteprofils flexibleren Material aufweisen. Das Profilelement und/oder der Endabschnitt schließt vorteilhafterweise mit den Außenflächen des Anbauteils und der Scheibe bündig ab.

Das Profilelement und/oder das Halteprofil der Scheibenabdichtung kann mindestens eine aus einem steiferen Material bestehenden Seele und eine im Vergleich dazu flexiblere Kunststoffummantelung aufweisen. Die Kunststoffummantelung kann im Wege des Extrudierens oder des Spritzgießens auf die Seele aufgebracht sein. Die Seele kann aus mindestens zwei Einzelteilen zusammengesetzt sein. Durch die Kombination von mehreren einfachen Geometrien lassen sich so kostengünstig komplexere Geometrien herstellen. Vorteilhafterweise besteht die Seele aus einem metallischen Material, vorzugsweise aus einer Aluminiumlegierung oder aus rostfreiem Edelstahl oder aus Titan oder einer Titanlegierung oder aus Federstahl oder aus Baustahl. Über die Auswahl des metallischen Materials und über die Materialstärke der Seele kann ebenfalls die Montagekraft, bzw. Demontagekraft über die sich ergebende Steifigkeit des gesamten Halteprofils oder von Teilbereichen des Halteprofils beeinflusst werden. Es kann zudem von Vorteil sein, durch zusätzliche Ausnehmungen in den Krümmungsbereichen der Seele des Halteprofils, die sich in Längsrichtung des Profilkörpers erstrecken, die Steifigkeit des Halteprofils anzupassen.

Gegenstand der Erfindung ist auch eine Anordnung mit einer erfindungsgemäßen Scheibenabdichtung nach einem der Ansprüche 13 bis 15.

### Ausführungsbeispiele

Im Folgenden wird die Erfindung anhand einer lediglich ein Ausführungsbeispiel darstellenden Zeichnung erläutert. Es zeigen schematisch:
- Fig. 1: einen Querschnitt durch eine erfindungsgemäße Scheibenabdichtung
- Fig. 2: einen Querschnitt einer weiteren Ausführungsform der in Fig. 1 gezeigten Scheibenabdichtung mit zusätzlichen Ausnehmungen im Krümmungsbereich der Seele des Halteprofils
- Fig. 3: einen Querschnitt durch eine weitere Ausführungsform der Scheibenabdichtung mit einem zusätzlichen Abstützelement
- Fig. 4: einen Querschnitt durch eine weitere Ausführungsform der Scheibenabdichtung mit einer mit einem elastischen Material gefüllten Unterbrechung des Profilschenkels des Halteprofils
- Fig. 5: einen Querschnitt durch eine Ausführungsform der zueinander komplementären Kontur der einander zugewandten Teilbereiche des Profilschenkels
- Fig. 6: einen Querschnitt durch eine andere Ausführungsform der zueinander komplementären Kontur der einander zugewandten Teilbereiche des Profil
- Fig. 7: einen Querschnitt durch eine weitere Ausführungsform der zueinander komplementären Kontur der einander zugewandten Teilbereiche des Profilschenkels
- Fig. 8: einen Querschnitt durch eine weitere Ausführungsform der Scheibenabdichtung mit einer mit einem elastischen Material gefüllten breiten Unterbrechung des Profilschenkels des Halteprofils
- Fig. 9: einen Querschnitt durch eine Ausführungsform der Scheibenabdichtung mit einem einzelnen Profilschenkel und einem zusätzlichen Abstützelement

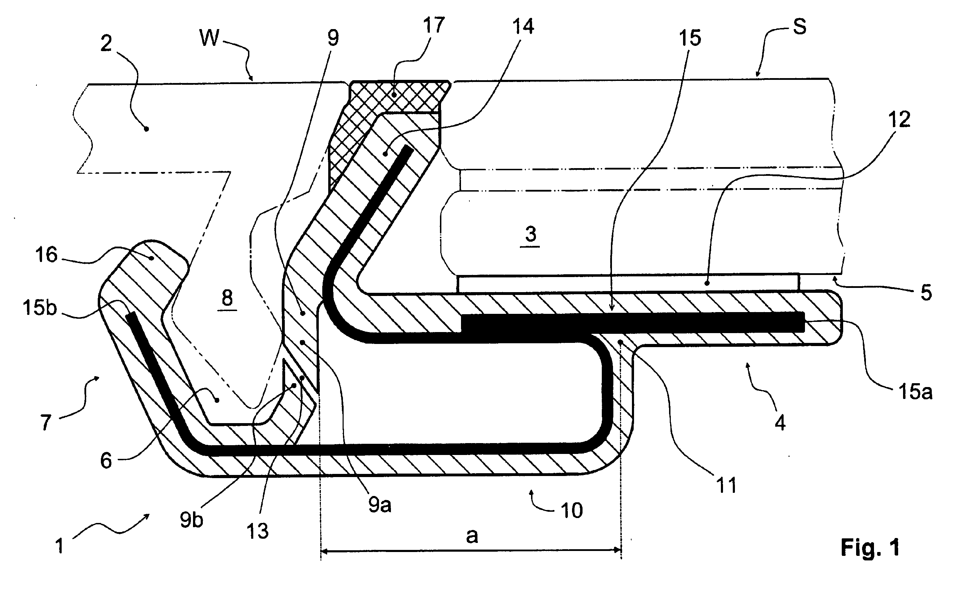

Die Figur 1 zeigt einen Querschnitt durch eine erfindungsgemäße Scheibenabdichtung zum Anschluss eines Anbauteils 2 an eine Scheibe 3 eines Kraftfahrzeuges, mit einem Halteprofil 1 aufweisend einen Halteschenkel 4, der an der Oberfläche 5 der Scheibe anliegt und einem Rastprofil 7 zur Aufnahme eines Anschlusselementes 8 des Anbauteils 2.

Das Anbauteil 2 ist hier eine Wasserkastenabdeckung 2. Das Halteprofil 1 ist derart ausgebildet, dass zur Montage des Anbauteils 2 eine geringere Kraft erforderlich ist als zu dessen Demontage. Das Rastprofil 7 weist zwei Profilschenkel auf, die einen hinterschnittenen Klemmkanal 6 bilden. Das Anschlusselement 8 hintergreift im eingebauten Zustand den hinterschnittenen Klemmkanal 6, wodurch das Anschlusselement 8 im Rastprofil 7 gehalten wird. Bei dem erfindungsgemäßen Halteprofil 1 ist zur Montage des Anbauteils 2 eine um eine Größenordnung geringere Kraft erforderlich ist als zur Demontage. Der Demontagekraft entspricht die Haltekraft des angeschlossenen Anbauteils 2. Der dem Halteschenkel 4 zugewandte erste Profilschenkel 9 weist eine Unterbrechung 13 auf, die den ersten Profilschenkel 9 in zwei Teilbereiche 9a, 9b unterteilt. Zusätzliches ist ein Verbindungselement 10 vorgesehen, das das Rastprofil 7 mit einem vom ersten Profilschenkel 9 in einem Abstand a beabstandeten Verbindungsbereich 11 des Halteschenkels 4 verbindet. Bei der Montage des Anbauteils 2 vergrößert sich der Abstand zwischen dem oberen Teilbereich 9a und dem unteren Teilbereich 9b. Da das Rastprofil 7 die Montagekräfte auf das Verbindungselement 10 überträgt, wirkt dieses als Rasthebelarm und die Montagekräfte werden reduziert. Die Länge des Rasthebelarmes, bzw. direkt verknüpft die Montagekraft kann daher vorteilhafterweise über die Einstellung des Abstandes a an die benötigten Anforderungen angepasst werden. Bei einer Demontage des Anbauteils 2 nähern die Teilbereiche 9a, 9b sich aneinander an. Das in dem hinterschnittenen Klemmkanal 6 befindliche Anschlusselement 8 zieht bei der Demontage des Anbauteil 2 den mit dem Verbindungselement 10 in Verbindung stehenden unteren Teilbereich 9b nach oben und drückt diesen gegen den gegenüberliegenden oberen Teilbereich 9a. Der untere Teilbereich 9b stützt sich dann an dem oberen Teilbereich 9a ab. Der Rasthebelarm des Verbindungselements 10 verkürzt sich dadurch, bzw. ist gar nicht wirksam. Aufgrund dessen nimmt vorteilhafterweise die Demontagekraft, und damit direkt verknüpft die Haltekraft des Anbauteils 2 einen im Vergleich zur Montagekraft wesentlich höheren Wert an. An dem Halteschenkel 4 ist ein Verbindungsstreifen 12 angeordnet, der vorzugsweise als doppelseitiges Klebeband ausgebildet ist und sich weiter vorzugsweise über die gesamte Länge des Halteschenkels 4 erstreckt. Über den Verbindungsstreifen 12 wird das Halteprofil 1 mit der rückseitigen Oberfläche 5 der Scheibe 3 des Kraftfahrzeuges permanent fest verbunden. Dies gewährleistet eine einfache, schnelle und kostengünstige Anbindung des Halteprofils 1 an vorzugsweise der Frontscheibe 3 des Kraftfahrzeuges. Das Verbindungselement 10 schließt an den Verbindungsbereich 11 im Wesentlichen rechtwinklig an. Der Verbindungsbereich 11 ist in etwa in der Mitte des Halteschenkels 4 angeordnet.

Die mittige Anordnung und der rechtwinklige Anschluss an das Verbindungselement 10 gewährleisten eine gleichmäßig verteilte Aufnahme und Einleitung der übertragenen Montagekräfte, und somit eine Minimierung einer für die Haftung des Verbindungsstreifens 12 negativen Schälbelastung. Aufgrund der geringen Montagekräfte und der beschriebenen Krafteinleitung in den Verbindungsbereich 11 kann auf eine zusätzliche Abstützung des Halteprofils 1 an einem Karosserieteil verzichtet werden. Das Verbindungselement 10 ist im Querschnitt L-förmig ausgebildet. Die Unterbrechung 13 des ersten Profilschenkels 9 weist eine geschlitzte Form auf. Die geschlitzte Form ist vorzugsweise in einem Extrusionswerkzeug des Halteprofils 1 vorgesehen, kann aber auch nachträglich durch einen Trennvorgang, z.B. mit einem Messer hergestellt werden. An das Halteprofil 1 schließt ein Profilelement 14 an, das den Bereich zwischen Scheibe 3 und Anbauteil 2 abdichtet. Das Profilelement 14 ist einstückig an das Halteprofil 1 angeformt und weist einen Endabschnitt 17 auf, der aus einem im Vergleich mit dem Material des Halteprofils 1 flexibleren, gummielastischen Material besteht. Der Endabschnitt 17 kann im Wege der Coextrusion an das Profilelement 14 angeformt sein, kann aber auch mit einem anderen Fügeverfahren, z.B. durch Kleben oder Schweißen mit dem Profilelement 14 verbunden sein. Das Profilelement 14 und der Endabschnitt 17 sind derart gestaltet, dass das Profilelement 14 sowohl mit der Anbauteilaußenfläche W der Wasserkastenabdeckung 2 als auch mit der Scheibenaußenfläche S der Scheibe 3 im Wesentlichen bündig abschließt. Das Profilelement 14 und das Halteprofil 1 weisen eine aus einem steifen Material bestehenden Seele 15, und eine im Vergleich dazu flexiblere Kunststoffummantelung 16 auf. Die Seele 15 besteht aus einem metallischen Material, vorzugsweise einer Folie aus Aluminium. Die Seele ist aus zwei Einzelteilen 15a, 15b aufgebaut, die eine unterschiedliche Materialstärke aufweisen. Im Bereich des Halteschenkels 4 ist ein erstes Aluminiumprofil 15a mit einer Materialstärke von vorzugsweise ca. 0,4 mm vorgesehen. Der Bereich des Rastprofils 7, des Verbindungselementes 10 und des Profilelementes 14 weist ein zweites Aluminiumprofil 15b mit einer Materialstärke von vorzugsweise ca. 0,2 mm auf. Die Aluminiumprofile 15a, 15b sind mit einem Haftvermittler überzogen und durch das Aufextrudieren der Kunststoffummantelung 16 in Ihrer Lage zueinander fixiert. Die beiden Aluminiumprofile 15a, 15b können auch direkt miteinander verbunden sein, durch z.B. Kleben, Schweißen oder Löten. Vorteilhafterweise kann durch die Wahl des Materials und der Materialstärke der Seele 15 des Halteprofils 1 die Montagekraft des Anbauteils 2 ebenfalls eingestellt werden.

Das Halteprofil 1 und/oder die Kunststoffummantelung 16 besteht vorzugsweise aus einem oder mehreren Kunststoffen jeweils geeigneter Härte, beispielsweise Polypropylen (PP), Polyvinylchlorid (PVC), Acrylnitril-Butadien-Styrol (ABS), thermoplastischen Elastomeren (TPE) oder dergleichen und/oder aus Kombinationen davon.

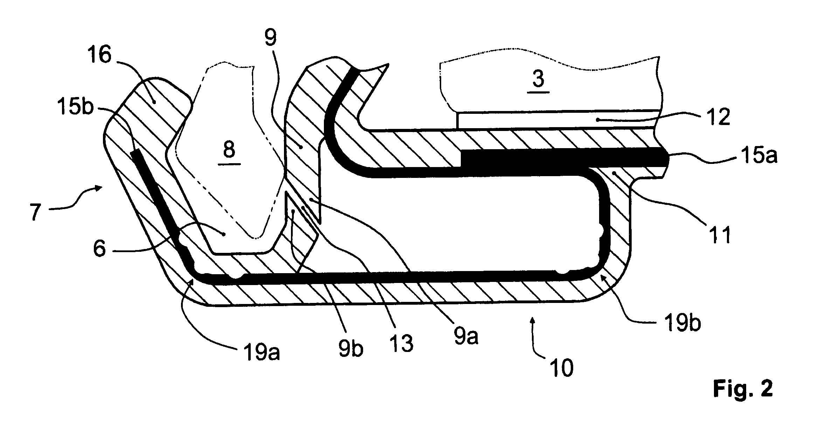

Die Figur 2 zeigt einen Querschnitt einer weiteren Ausführungsform der in Fig. 1 gezeigten Scheibenabdichtung. In den Krümmungsbereichen der Seele 15b des Verbindungselements 10 befinden sich zusätzliche Ausnehmungen 19a, 19b, die sich in Längsrichtung des Halteprofils 1 erstrecken und über deren Verteilung, Anzahl und Kerbradius die Steifigkeit des Verbindungselementes 10 angepasst werden kann.

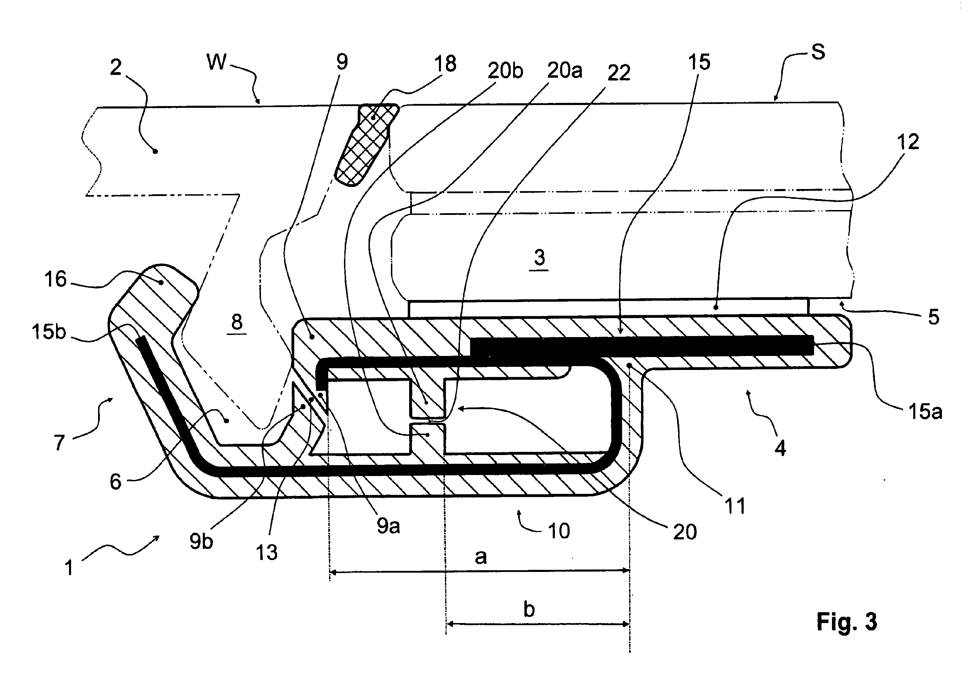

In Figur 3 ist ein zusätzliches Abstützelement 20 vorgesehen, das zwischen dem Halteprofil 7 und dem Verbindungsbereich 11 angeordnet ist und ebenfalls eine Unterbrechung 22 aufweist. Das Abstützelement 20 ist von dem Verbindungsbereich 11 im Abstand b beabstandet. Bei der Montage des Anbauteils 2 erfolgt ebenfalls eine Vergrößerung des Abstandes zwischen den Teilbereichen des Abstützelements 20a, 20b. Das Abstützelement 20 und der unterbrochene erste Profilschenkel 9 können vorteilhafterweise so aufeinander abgestimmt sein, dass bei der Demontage des Anbauteils die Abstützelementteilbereiche 20a, 20b aneinander anliegen, bevor die Teilbereiche 9a, 9b des Profilschenkels 9 aneinander anliegen. Über den Abstand b kann dann vorteilhafterweise die Demontagekraft eingestellt werden, indem der dann wirkende Rasthebelarm bei der Demontage gegenüber der Anordnung in Figur 1 variiert wird. Das Abstützelement 20 und der Profilschenkel 9 können vorteilhafterweise auch so aufeinander abgestimmt sein, dass die jeweiligen Teilbereiche 9a, 9b, 20a, 20b gleichzeitig aneinander anliegen, um die auftretenden Demontagekräfte gleichmäßig aufzunehmen und in die Scheibe 3 überzuleiten. Hierzu kann es von Vorteil sein, nicht ein einziges Abstützelement 20, sondern mehrere Abstützelemente 20 vorzusehen. Ferner ist an der Wasserkastenabdeckung 2 ein Abdichtungselement 18 angeordnet, das die Anbauteilaußenfläche W der Wasserkastenabdeckung 2 mit der Scheibenaußenfläche S der Scheibe 3 im Wesentlichen bündig abschließt und/oder abdichtet. Das Abdichtelement 18 kann im Spritzgießverfahren an die Wasserkastenabdeckung 2 angeformt sein, kann aber auch angeklebt oder geschweißt sein. Das Abdichtelement 18 besteht bevorzugt aus einem thermoplastischen Elastomer (TPE), einem Moosgummi oder einem anderen geeigneten Material.

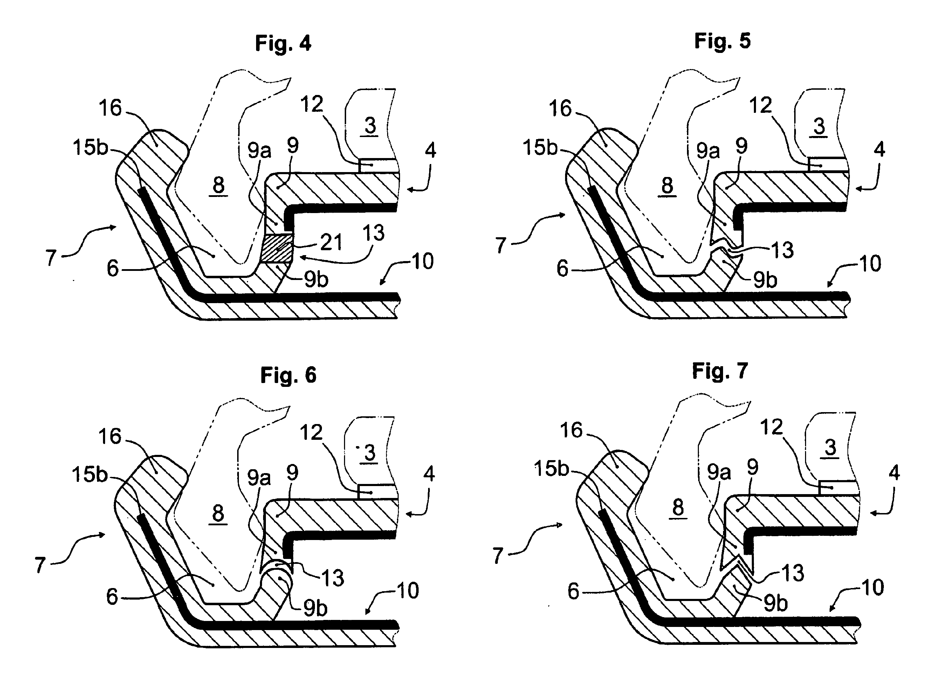

Die Figur 4 zeigt einen Querschnitt durch eine weitere Ausführungsform der Scheibenabdichtung mit einer mit einem im Vergleich zum Halteprofil elastischeren Material gefüllten Unterbrechung 13 des Profilschenkels 9 des Halteprofils 1. Das elastische Material bildet ein Dehnelement 21, das vorzugsweise stoffschlüssig mit den Teilbereichen 9a, 9b des Profilschenkels 9 verbunden ist. Das Dehnelement 21 ist vorteilhafterweise im Wege der Coextrusion in die Unterbrechung 13 des Profilschenkels 9 eingebracht, kann aber auch z.B. eingeklebt oder geschweißt sein. Das gegenüber dem Material des Halteprofils 1 elastischere Material des Dehnelements 21 ermöglicht durch die größere Dehnbarkeit weiterhin eine Auslenkung des Verbindungselementes 10 und damit verbunden die Reduzierung der Montagekraft durch den vorliegenden Rasthebelarm. Vorteilhafterweise ist zudem eine Abdichtung des von dem Profilschenkel 9, dem Verbindungselement 10 und dem Halteschenkel 4 eingeschlossenen Hohlraumes gewährleistet. Vorteilhafterweise kann insbesondere über die gewählte Elastizität des Materials des Dehnelements 21 die Montagekraft zusätzlich gezielt eingestellt werden. Das Material des Dehnelements 21 kann ein geschäumtes Material sein oder weiter vorzugsweise ein Material mit einer hohen Dehnfähigkeit sein.

Die Figuren 5 bis 7 zeigen jeweils einen Querschnitt durch eine Ausführungsform, bei der die einander zugewandten Teilbereiche 9a, 9b des Profilschenkels 9 jeweils eine zueinander komplementäre Kontur besitzen. In den Figuren 5 bis 7 sind bevorzugte Ausführungsformen dieser komplementären Konturen dargestellt. Die komplementären Konturen greifen vorzugsweise so ineinander ein, dass ein Ausknicken und/oder aneinander Abgleiten der beiden Teilbereiche 9a, 9b des ersten Profilschenkels 9 durch die bei der Demontage auftretende Druckbelastung auf die Teilbereiche 9a, 9b verhindert wird. Zudem wird die Demontagekraft gleichmäßig und sicher von dem unteren Teilbereich 9b auf den oberen Teilbereich 9a übertragen. Zudem kann es vorteilhaft sein, dass die Abstützelementteilbereiche 20a, 20b des in der Figur 3 beschriebenen Abstützelementes 20 entsprechende im Querschnitt zueinander komplementäre Konturen aufweisen.

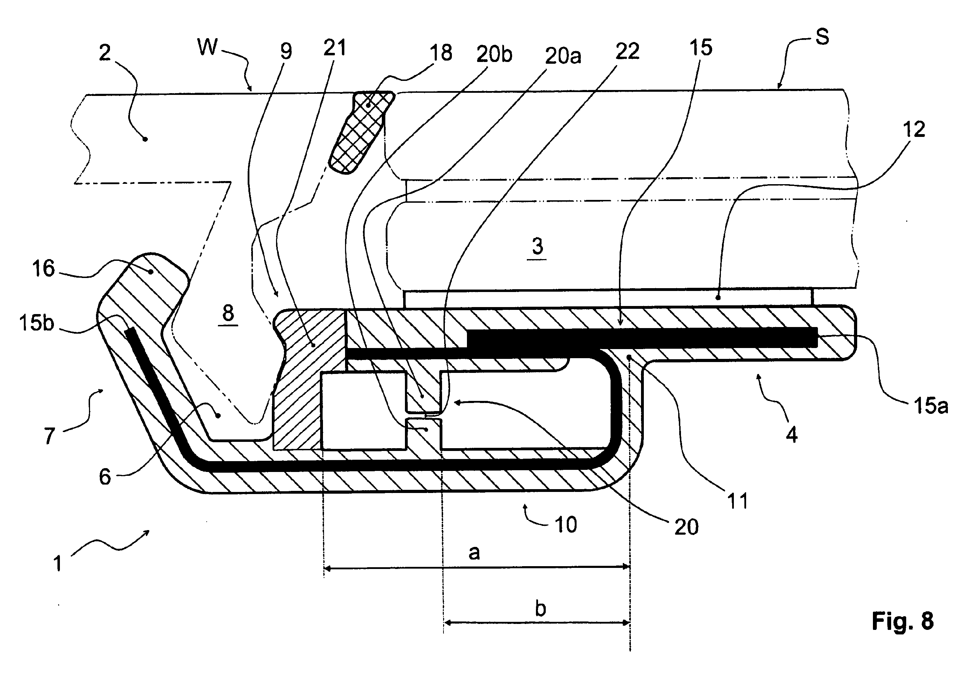

Die Figur 8 zeigt einen Querschnitt durch eine weitere Ausführungsform der Scheibenabdichtung mit einer mit einem elastischen Material gefüllten, hier sehr breit ausgebildeten Unterbrechung 13 des Profilschenkels 9 des Halteprofils 1. Das im Vergleich zum Material des Halteprofils 1 elastischere Material bildet wiederum ein Dehnelement 21. Das Dehnelement 21 ist vorteilhafterweise im Wege der Coextrusion in die Unterbrechung 13 des Profilschenkels 9 eingebracht, kann aber auch z.B. eingeklebt oder geschweißt sein.

Das gegenüber dem Material des Halteprofils 1 elastischere Material des Dehnelements 21 ermöglicht durch die größere Dehnbarkeit weiterhin eine Auslenkung des Verbindungselementes 10, und damit verbunden eine Reduzierung der Montagekraft. Vorzugsweise kann das Material des Dehnelements ein geschäumtes Material sein oder weiter vorzugsweise ein Material mit einer hohen Dehnfähigkeit sein. Vorteilhafterweise passt sich das Dehnelement 21 an die Außenkontur des Anschlusselementes 8 an. Neben einer Abdichtung des Klemmkanals 6 kann so eine zusätzliche Fixierung des Anschlusselementes 8 in dem Klemmkanal 6 erreicht werden. Das Hatteprofil 1 weist zwischen dem Dehnelement 21 und dem Verbindungsbereich 11 wiederum ein Abstützelement 20 auf, das eine Unterbrechung 22 aufweist. Über den Abstand b kann vorteilhafterweise die Demontagekraft eingestellt werden, indem der wirkende Rasthebelarm bei der Demontage gegenüber der Anordnung in Figur 1 angepasst wird. Die Demontagekraft vergrößert sich erfindungsgemäß gegenüber der Montagekraft durch die Verkürzung des Rasthebelarms des Verbindungselements 10, sobald die Abstützelementteilbereiche 20a, 20b aneinander anliegen.

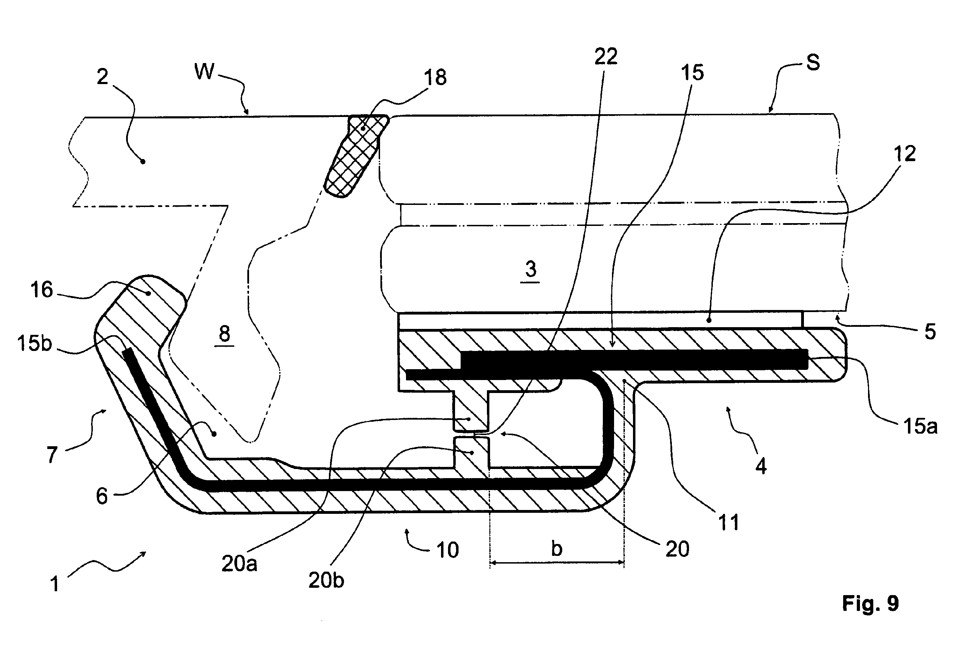

Die Figur 9 zeigt einen Querschnitt durch eine Ausführungsform der Scheibenabdichtung mit einem einzelnen Profilschenkel und einem zusätzlichen Abstützelement 20. Die Scheibenabdichtung 1 weist keinen ersten Profilschenkel 9 auf. Die Verkürzung des wirksamen Hebelarmes des Verbindungselementes 10 erfolgt bei der Demontage über das Abstützelement 20, das zwischen dem zweiten Profilschenkel, der gleichzeitig das Rastprofil 7 bildet, und dem Verbindungsbereich 11 angeordnet ist.

## Patentansprüche

1. Scheibenabdichtung zum Anschluss eines Anbauteils (2) an eine Scheibe (3) eines Kraftfahrzeuges, mit einem Halteprofil (1) aufweisend
- einen Halteschenkel (4), der an der Oberfläche (5) der Scheibe (3) anliegt und
- einem Rastprofil (7) zur Aufnahme eines Anschlusselementes (8) des Anbauteils (2),
wobei das Rastprofil (7) mindestens zwei Profilschenkel aufweist, die gemeinsam einen hinterschnittenen Klemmkanal (6) bilden und wobei das Halteprofil (1) derart ausgebildet ist, dass zur Montage des Anbauteils (2) eine geringere Kraft erforderlich ist als zur Demontage,
**dadurch gekennzeichnet, dass**
ein Verbindungselement (10) vorgesehen ist, das das Rastprofil (7) mit einem von einem ersten Profilschenkel (9) beabstandeten Verbindungsbereich (11) des Halteschenkels (4) verbindet, dass der dem Halteschenkel (4) zugewandte erste Profilschenkel (9) eine Unterbrechung (13) aufweist, die den ersten Profilschenkel (9) in zwei Teilbereiche (9a, 9b) unterteilt und, dass der untere Teilbereich (9b) der zwei Teilbereiche (9a, 9b) in Verbindung mit dem Verbindungselement (10) steht, so dass bei der Montage des Anbauteils (2) eine Vergrößerung des Abstandes zwischen den Teilbereichen (9a, 9b) erfolgt, während bei einer Demontage des Anbauteils (2) die Teilbereiche (9a, 9b) sich aneinander annähern.

2. Scheibenabdichtung nach Anspruch 1, **dadurch gekennzeichnet, dass** der Halteschenkel (4) ein an die Oberfläche (5) der Scheibe (3) angrenzendes Klebeband (12) oder eine an der Oberfläche (5) der Scheibe (3) angrenzende Klebstoffschicht (12) aufweist.

3. Scheibenabdichtung nach einem der Ansprüche 1 oder 2, **dadurch gekennzeichnet, dass** das Verbindungselement (10) an den Verbindungsbereich (11) im Wesentlichen rechtwinklig anschließt.

4. Scheibenabdichtung nach einem der Ansprüche 1 bis 3, **dadurch gekennzeichnet, dass** der Verbindungsbereich (11) in etwa in der Mitte des Halteschenkels (4) angeordnet ist.

5. Scheibenabdichtung nach einem der Ansprüche 1 bis 4, **dadurch gekennzeichnet, dass** das Verbindungselement (10) im Querschnitt im Wesentlichen L-förmig ausgebildet ist.

6. Scheibenabdichtung nach einem der Ansprüche 1 bis 5, **dadurch gekennzeichnet, dass** die einander zugewandten Ränder der Teilbereiche (9a, 9b) im Querschnitt eine zueinander komplementäre Kontur aufweisen.

7. Scheibenabdichtung nach einem der Ansprüche 1 bis 6, **dadurch gekennzeichnet, dass** die Unterbrechung (13) eine geschlitzte Form aufweist.

8. Scheibenabdichtung nach einem der Ansprüche 1 bis 7, **dadurch gekennzeichnet, dass** innerhalb der Unterbrechung (13) ein im Vergleich zum Halteprofil (1) elastischeres Material angeordnet ist.

9. Scheibenabdichtung nach einem der Ansprüche 1 bis 8, **dadurch gekennzeichnet, dass** zwischen dem Rastprofil (7) und dem Verbindungsbereich (11) mindestens ein Abstützelement (20) angeordnet ist, das eine Unterbrechung (22) aufweist.

10. Scheibenabdichtung nach einem der Ansprüche 1 bis 9, **dadurch gekennzeichnet, dass** an das Halteprofil (1) ein Profilelement (14) anschließt, das den Bereich zwischen Scheibe (3) und Anbauteil (2) abdichtet.

11. Scheibenabdichtung nach einem der Ansprüche 1 bis 10, **dadurch gekennzeichnet, dass** das Profilelement (14) und/oder das Halteprofil (1) mindestens eine aus einem steifen Material bestehenden Seele (15) und eine im Vergleich dazu flexiblere Kunststoffummantelung (16) aufweist.

12. Anordnung mit einer Scheibenabdichtung nach einem der Ansprüche 1 bis 11 und einer Scheibe (3) eines Kraftfahrzeuges.

13. Anordnung mit einer Scheibenabdichtung nach einem der Ansprüche 1 bis 11 und einem Anbauteil (2).

14. Anordnung nach Anspruch 13, wobei das Anbauteil (2) als Wasserkastenabdeckung ausgebildet ist.

## Claims

1. Window seal for connecting an add-on part (2) to a window (3) of a motor vehicle, with a holding profile (1) having
- a holding limb (4) which bears against the surface (5) of the window (3), and
- a latching profile (7) for receiving a connecting element (8) of the add-on part (2),
wherein the latching profile (7) has at least two profile limbs which together form an undercut clamping channel (6), and wherein the holding profile (1) is designed in such a manner that a smaller force is required for installing the add-on part (2) than for removing same,
**characterized in that** a connecting element (10) is provided, the connecting element (10) connecting the latching profile (7) to a connecting region (11) of the holding limb (4), which connecting region (11) is spaced apart from a first profile limb (9), **in that** the first profile limb (9) which faces the holding limb (4) has an interruption (13) which divides the first profile limb (9) into two subregions (9a, 9b), and **in that** the lower subregion (9b) of the two subregions (9a, 9b) is connected to the connecting element (10) such that, when the add-on part (2) is installed, the distance between the subregions (9a, 9b) increases, whereas, when the add-on part (2) is removed, the subregions (9a, 9b) draw closer to each other.

2. Window seal according to Claim 1, **characterized in that** the holding limb (4) has an adhesive tape (12), bordering the surface (5) of the window (3) or an adhesive layer (12) bordering the surface (5) of the window (3).

3. Window seal according to either of Claims 1 and 2, **characterized in that** the connecting element (10) is connected to the connecting region (11) substantially at a right angle.

4. Window seal according to one of Claims 1 to 3, **characterized in that** the connecting region (11) is arranged approximately in the centre of the holding limb (4).

5. Window seal according to one of Claims 1 to 4, **characterized in that** the connecting element (10) is of substantially L-shaped design in cross section.

6. Window seal according to one of Claims 1 to 5, **characterized in that** the mutually facing edges of the subregions (9a, 9b) have a mutually complementary contour in cross section.

7. Window seal according to one of Claims 1 to 6, **characterized in that** the interruption (13) has a slit form.

8. Window seal according to one of Claims 1 to 7, **characterized in that** a material which is more elastic than the holding profile (1) is arranged within the interruption (13).

9. Window seal according to one of Claims 1 to 8, **characterized in that** at least one supporting element (20) which has an interruption (22) is arranged between the latching profile (7) and the connecting region (11).

10. Window seal according to one of Claims 1 to 9, **characterized in that** a profile element (14) which seals the region between the window (3) and the add-on part (2) is connected to the holding profile (1).

11. Window seal according to one of Claims 1 to 10, **characterized in that** the profile element (14) and/or the holding profile (1) have/has at least one core (15) composed of a stiff material and a plastics casing (16) which is more flexible in comparison thereto.

12. Arrangement with a window seal according to one of Claims 1 to 11 and with a window (3) of a motor vehicle.

13. Arrangement with a window seal, according to one of Claims 1 to 11 and with an add-on part (2).

14. Arrangement according to Claim 13, wherein the add-on part (2) is designed as a water box cover.

## Revendications

1. Joint d'étanchéité pour vitre pour la jonction d'une pièce rapportée (2) à une vitre (3) d'un véhicule automobile, avec un profilé de maintien (1), présentant
- une branche de maintien (4), qui s'applique sur la surface (5) de la vitre (3) et
- un profilé d'encliquetage (7) destiné à recevoir un élément de jonction (8) de la pièce rapportée (2),
dans lequel le profilé d'encliquetage (7) présente au moins deux branches de profilé, qui forment ensemble un canal de serrage (6) en contre-dépouille et dans lequel le profilé de maintien (1) est réalisé de telle manière qu'une force moins élevée soit nécessaire pour le montage de la pièce rapportée (2) que pour le démontage, **caractérisé en ce qu'**il est prévu un élément de liaison (10), qui relie le profilé d'encliquetage (7) à une zone de liaison (11) de la branche de maintien (4) espacée d'une première branche de profilé (9), **en ce que** la première branche de profilé (9) tournée vers la branche de maintien (4) présente une interruption (13), qui divise la première branche de profilé (9) en deux zones partielles (9a, 9b), et **en ce que** la zone partielle inférieure (9b) des deux zones partielles (9a, 9b) est en liaison avec l'élément de liaison (10), de telle manière que, lors du montage de la pièce rapportée (2), il se produise un agrandissement de la distance entre les zones partielles (9a, 9b), tandis que, lors d'un démontage de la pièce rapportée (2), les zones partielles (9a, 9b) se rapprochent l'une de l'autre.

2. Joint d'étanchéité pour vitre selon la revendication 1, **caractérisé en ce que** la branche de maintien (4) présente une bande adhésive (12) adjacente à la surface (5) de la vitre (3) ou une couche de colle (12) adjacente à la surface (5) de la vitre (3).

3. Joint d'étanchéité& pour vitre selon l'une des revendications 1 ou 2, **caractérisé en ce que** l'élément de liaison (10) se raccorde essentiellement à angle droit à la zone de liaison (11).

4. Joint d'étanchéité pour vitre selon l'une quelconque des revendications 1 à 3, **caractérisé en ce que** la zone de liaison (11) est disposée environ au milieu de la branche de maintien (4).

5. Joint d'étanchéité pour vitre selon l'une quelconque des revendications 1 à 4, **caractérisé en ce que** l'élément de liaison (10) présente une section transversale essentiellement en forme de L.

6. Joint d'étanchéité pour vitre selon l'une quelconque des revendications 1 à 5, **caractérisé en ce que** les bords tournés l'un vers l'autre des zones partielles (9a, 9b) présentent en section transversale un contour complémentaire l'un à l'autre.

7. Joint d'étanchéité pour vitre selon l'une quelconque des revendications 1 à 6, **caractérisé en ce que** l'interruption (13) présente une forme fendue.

8. Joint d'étanchéité pour vitre selon l'une quelconque des revendications 1 à 7, **caractérisé en ce qu'**un matériau plus élastique par rapport au profilé de maintien (1) est disposé dans l'interruption (13).

9. Joint d'étanchéité pour vitre selon l'une quelconque des revendications 1 à 8, **caractérisé en ce qu'**au moins un élément d'appui (20), qui présente une interruption (22), est disposé entre le profilé d'encliquetage (7) et la zone de liaison (11).

10. Joint d'étanchéité pour vitre selon l'une quelconque des revendications 1 à 9, **caractérisé en ce qu'**un élément profilé (14) se raccorde au profilé de maintien (1) et assure l'étanchéité de la zone entre la vitre (3) et la pièce rapportée (2).

11. Joint d'étanchéité pour vitre selon l'une quelconque des revendications 1 à 10, **caractérisé en ce que** l'élément profilé (14) et/ou le profilé de maintien (1) présente au moins une âme (15) composée d'un matériau rigide et un enrobage de matière plastique (16) plus flexible par comparaison avec celle-ci.

12. Agencement avec un joint d'étanchéité pour vitre selon l'une quelconque des revendications 1 à 11 et une vitre (3) d'un véhicule automobile.

13. Agencement d'un joint d'étanchéité pour vitre selon l'une quelconque des revendications 1 à 11 et une pièce rapportée (2).

14. Agencement selon la revendication 13, dans lequel la pièce rapportée (2) est un couvercle de boîte à eau.
